# FASCICULE DE BREVET EUROPEEN

(11) **EP 1 589 749 B1**
(45) Date de publication et mention de la délivrance du brevet: **13.12.2006**
(21) Numéro de dépôt: 05300287.9
(22) Date de dépôt: 18.04.2005
(51) Int. Cl.: H04N 5/225, G02B 27/32, G03B 29/00

(54) **Dispositif numérique de prise de vue avec capteur d'inclinaison**
Digitale Bildaufnahmevorrichtung mit Neigungssensor
Digital image-pickup device with inclination sensor

(30) Priorité: 19.04.2004 FR 0404104
(43) Date de publication de la demande: 26.10.2005
(73) Titulaire: TCL & Alcatel Mobile Phones Ltd, Kowloon, Hongkong (CN)
(72) Inventeur: Caruhel, Deny, 92707 Colombes Cedex (FR); Ciri, Paolo, 92707 Colombes Cedex (FR)
(74) Mandataire: Hervouet, Sylvie

(56) Documents cités:
- US-A1- 2003 063 200
- PATENT ABSTRACTS OF JAPAN vol. 2003, no. 12, 5 décembre 2003 (2003-12-05) & JP 2004 138737 A (SHARP CORP), 13 mai 2004 (2004-05-13)
- PATENT ABSTRACTS OF JAPAN vol. 2003, no. 12, 5 décembre 2003 (2003-12-05) & JP 2003 280080 A (YAMAHA CORP), 2 octobre 2003 (2003-10-02)
- PATENT ABSTRACTS OF JAPAN vol. 1996, no. 03, 29 mars 1996 (1996-03-29) & JP 07 306486 A (CANON INC), 21 novembre 1995 (1995-11-21)
- PATENT ABSTRACTS OF JAPAN vol. 2003, no. 11, 5 novembre 2003 (2003-11-05) & JP 2003 219239 A (CANON I-TECH INC), 31 juillet 2003 (2003-07-31)
- PATENT ABSTRACTS OF JAPAN vol. 1998, no. 10, 31 août 1998 (1998-08-31) & JP 10 122857 A (SONY CORP), 15 mai 1998 (1998-05-15)

## Description

La présente invention concerne un dispositif numérique de prise de vue, tel qu'un appareil photo numérique ou une caméra numérique.

Un tel dispositif intègre un capteur d'image constitué de matériaux semi-conducteurs permettant d'obtenir des images directement sous forme numérique. Dans un dispositif numérique de prise de vue, c'est le capteur d'image qui remplace la pellicule des appareils photo ou caméras classiques.

Ce type de dispositif numérique s'est beaucoup répandu ces dernières années. Les utilisateurs d'appareil photo numérique peuvent en particulier visualiser sur un écran l'image numérique saisie par le capteur d'image et décider alors de valider la photo pour la mettre en mémoire dans le dispositif ou pas. Cette visualisation en temps réel de l'image saisie par l'appareil photo permet de limiter les prises de vue ratées.

Cependant, les appareils numériques de prise de vue n'ont pas d'assistance visuelle d'inclinaison et de cadrage de la prise de vue. Ainsi, certaines photos peuvent présenter une inclinaison indésirable avec la ligne d'horizon qui n'est pas forcément détectée par l'utilisateur lors de la visualisation sur l' écran du dispositif. En particulier lorsque la prise de vue concerne un paysage, telqu'un paysage de mer par exemple, l'alignement avec la ligne d'horizon est difficile à obtenir visuellement.

Sur certains appareils de photographie classiques, ilexiste des aides visuelles à l'inclinaison de l'objectif. Ces moyens sont en général constitués de niveaux à bulle intégrés dans l'appareil et fournissent une mesure de l'inclinaison de l'objectif par rapport à l'horizontal.

Il existe également des pieds de support pour caméra numérique intégrant des niveaux à bulle pour règler l'inclinaison de la caméra.

On peut trouver de tels dispositifs par exemple sur le site Internet suivant :
http://www.amaudfrichphoto.com/gp_recadrage_access.htm.

Ces systèmes connus sont des systèmes mécaniques lourds à mettre en oeuvre et encombrants.

De tels systèmes mécaniques d'indication de l'inclinaison de l'appareil ne peuvent pas être transposés dans un appareil numérique sans l'alourdir considérablement.

Le document JP-A-2003 280080 décrit un appareil photographique numérique comprenant un capteur d'inclinaison et un écran de visualisation de la prise de vue, sur lequel est affichée une ligne d'inclinaison de référence.

L'invention propose un appareil numérique de prise de vue qui permet un contrôle de l'inclinaison de l'objectif de prise de vue.

Plus spécifiquement, l'invention concerne un dispositif numérique de prise de vue caractérisé ence qu'il comprend :
- un écran de visualisation de la prise de vue, sur lequel est affichée au moins une lig ne d'inclinaison de référence ;
- un capteur d'inclinaison adapté à afficher sur l'écran au moins un curseur mobile par rapport à ladite ligne d'inclinaison de référence.
- Une interface homme-machine adaptée à commander le déplacementde la ligne d'inclinaison de référence.

Selon un mode de réalisation, au moins une ligne verticale mobile et/ou au moins une ligne horizontale mobile sont affichées sur l'écran de visualisation.

Selon une caractéristique, l'interface homme-machine est adaptée à commanderle déplacement de ladite au moins une ligne verticale et/ou horizontale parallèlement aux bords de l'écran.

Selon une caractéristique, l'interface homme-machine est adaptée à commander la rotation de ladite au moins une ligne d'inclinaison de référence.

Selon un mode de réalisation, le curseur mobile comprend au moins une ligne d'inclinaison mobile adaptée à se confondre avec au moins une ligne de référence affichée sur l'écran.

Selon un mode de réalisation, le curseur mobile comprend au moins un point mobile adapté à se placer sur au moins une ligne de référence affichée sur l'écran.

Selon un mode de réalisation, une pluralité de lignes horizontales fixes et une pluralité de lignes verticales fixes sont affichées sur l'écran de prise de vue pour former un quadrillage.

Selon une caractéristique, au moins une ligne horizontale fixe et au moins une ligne verticale fixe sont respectivement placées au centre de la hauteur et au centre de la largeur de l'écran.

Selon une caractéristique, au moins une ligne horizontale fixe et au moins une ligne verticale fixe sont respectivement placées sur la délimitation du tiers de la hauteur et du tiers de la largeur de l'écran.

Les particularités et avantages de l'invention ressortiront plus clairement à la lecture de la description qui suit, faite à titre d'exemple illustra tif et non limitatif, en référence aux figures annexées dans lesquelles :
- la figure 1 est un schéma de principe d'un dispositif numérique de prise de vue selon l'invention;
- la figure 2 est un schéma de principe de l'acquisition de prise de vue parle dispositif de la figure 1 ;
- la figure 3 est un schéma d'un écran de visualisation de prise de vue selon un premier mode de réalisation de l'invention;
- la figure 4 est un schéma d'un écran de visualisation de prise de vue selon un deuxième mode de réalisation de l'invention ;
- la figure 5 est un schéma d'un écran de visualisation de prise de vue selon un troisième mode de réalisation de l'invention.

Le dispositif numérique de prise de vue selon l'invention comprend un écran pour permettre la visualisation par un utilisa te ur de la prise de vue à effectuer. Sur cet écran de visualisation est affichée au moins une ligne d'inclinaison de référence. Par inclinaison de référence, on peut entendre une ligne horizontale ou verticale, mais également une diagonale donnée. Le dispositif selon l'invention comprend également un capteur d'inclinaison adapté à afficher sur l'écran au moins un curseur mobile par rapport à ladite ligne d'inclinaison de référence.

L'utilisateur peut ainsi incliner l'appareil de prise de vue pour positionner le curseur mobile sur l'une ou l'autre des lignes d'inclinaison de référence afin d'orienter au mieux sa prise de vue. La ou les lignes d'inclinaison de référence peuvent également constituer une assistance pourle cadrage de la prise de vue.

Le dispositif selon l'invention va être décrit plus spécifiquement en référence à la figure illustratives 1.

Le dispositif 10 selon l'invention est destiné à réaliser des prises de vue numériques. Il peut s'agir d'un appareil photo ou d'un caméscope ou du tout autre appareil adapté à saisir des images et à les retranscrire numériquement dans une mémoire.

Un tel dispositif 10 est connu en soi et comporte, entre autre, un boîtier 11 dans lequel sont disposé une électronique de traitement et un objectif 12 comportant des lentilles de focalisation. Un viseur 13 est prévu dans le boîtier 11 afin de permettre à un utilisateur de viser l'objet à saisir en prise de vue.

Le boîtier 11 comporte également un capteur d'image 14, telqu'un capteur à transfert de charge, dit CCD pour Charge Couple Device en anglais; ou un capteurà injection de charge, dit CID pour Charge Injection Device en anglais. Un tel capteur comporte une matrice d'éléments semi-conducteurs photo sensibles répondant parun signal électrique à des stimuli lumineux. Le capteur d'image 14 reçoit un faisceau lumineux 15 provenant des lentilles de l'objectif 12 et transmet un signal électrique représentatif de l'illumination reçue pixel par pixel à une unité de traitement électronique, non représentée, tel qu'un microprocesseur.

Le dispositif 10 comporte aussiun écran de visualisation 20 sur lequel l'unité de traitement électronique peut afficher le résultat de l'image saisie parle capteur d'image 14. Dans certains modèles de dispositif, l'écran 20 peut ainsi remplacer le viseur 13 car l'utilisateur peut visualiser sa prise de vue sur l'écran et décider de conserveren mémoire la prise de vue affichée ounon.

Le dispositif 10 selon l'invention comporte en outre un capteur d'inclinaison 17 disposé dans le boîtier 11 et connecté avec l'électronique de traitement du dispositif. Ce capteur d'inclinaison 17 est adapté à fournir un signal représentatif de l'inclinaison du capteur d'image 14 par rapport à une ligne de référence, telle que la ligne d'horizon parexemple.

Le capteur d'inclinaison 17 peut être un inclinomètre. Un inclinomètre peut détecter l'alignement avec une ligne d'inclinaison fixe, en générale une ligne horizontale ou verticale. Un tel capteur peut être embarqué dans un dispositif de petite taille telqu'un appareil numérique de prise de vue.

Selon un mode de réalisation possible, l'inclinomètre peut être constitué d'au moins deux plaques solides partiellement conductrices parallèles l'une à l'autre. Un premier et un second matériaux isolants non miscibles entre eux sont disposés entre les plaques. Le premier matériau a une constante diélectrique plus élevée que celle du second matériau. Les premier et second matériaux peuvent être deux liquides non miscibles entre eux et de densités différentes; ou un liquide et un gaz non miscible dans le dit liquide.

Les plaques et les matériaux diélectriques forment un condensateur à capacité variable. En fonction de l'inclinaison du capteur d'inclinaison, et donc du capteur d'image, la répartition des matériaux entre les plaques change et modifie la valeurde la capacité de l'inclinomètre pour fournir un signal représentatif de l'inclinaison du capteur d'image par rapport à une ligne de référence d'inclinaison fixe. Parexemple, le premier matériau peut être un liquide, tel que du glycol, et le second matériau peut être un gaz inerte quelconque.

L'inclinomètre peut comporter plus de deux plaques afin de détecter des inclinaisons sur 360°.

Le capteur d'inclinaison 17 peut également être constitué par un microsystème électromécanique, connu sous le terme de MEM pour Micro Electro Mechanical en anglais. Un tel système MEM peut inclure un accéléromètre et/ou un gyroscope. Selon l'inclinaison du système MEM, la force gravitationnelle peut entraîner un déplacement mécanique qui induit un signal électrique représentatif de l'accélération de l'élément mécanique mobile.

Tout autre technologie de capteur d'inclinaison peut être envisagée dans le cadre de la présente invention, à condition que le capteur soit d'une technologie permettant une miniaturisation suffisante pour être embarqué dans un dispositif numérique de prise de vue. En particulier, le capteur d'inclinaison peut être un composant monté en surface sur une plaque de circuit imprimé, dit SMD pour Surface Mounted device enanglais.

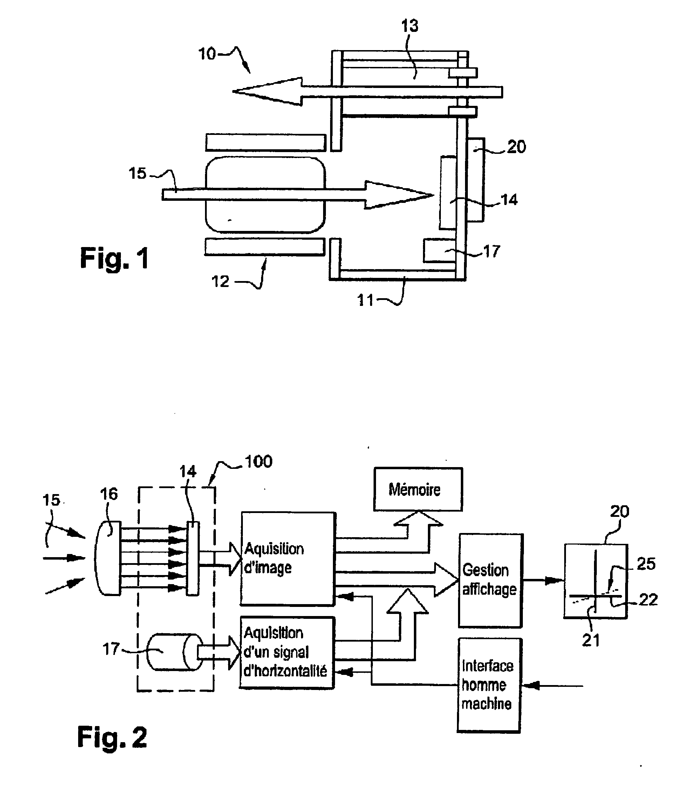

Le diagramme de blocs de la figure 2 illustre schématiquement une prise de vue avec un dispositif 10 selon l'invention.

La lumière 15 provenant de l'objet à saisir en prise de vue est focalisée par une lentille 16 de l'objectif 12 du dispositif 10 sur le capteur d'image 14 qui fournit des données d'acquisition d'image, de façon connue en soi. Par ailleurs, le capteur d'inclinaison 17 fournit un signal d'inclinaison. De plus, le capteur d'inclinaison 17 et le capteur d'image doivent être physiquement disposés dans le même plan 100 à l'intérieur du boîtier 11 du dispositif 10.

L'unité de traitement électronique du dispositif reçoit ainsi des données d'acquisition d'image et des données d'acquisition d'un signal d'inclinaison. Les données d'image sont d'une part stockées en mémoire et d'autre part transmises à une unité de gestion d'affichage liée à l'écran de visualisation 20.

Le signal d'inclinaison fournit parle capteur 17 est traité par l'unité électronique qui transmet alors un signal d'inclinaison de référence à l'unité de gestion d'affichage. Le capteur d'inclinaison peut donc détecter l'inclinaison par rapport à l'horizontal, puis l'unité de traitement transforme ce signal en ligne de référence à afficher qui peut être horizontale, verticale ou diagonale.

L'écran de visualisation 20 est ainsi adapté à afficher l'image saisie par l'objectif du dispositif de prise de vue ainsi qu'un élément représentatif de l'inclinaison de cette prise de vue. L'écran 20 du dispositif selon l'invention affiche au moins une ligne d'inclinaison de référence 21 et au moins un curseur mobile 25.

Selon le mode de réalisation illustré sur la figure 2, l'écran 20 affiche une ligne verticale fixe 21 et une ligne horizontale fixe 22 et une ligne d'inclinaison mobile 25 représentative du signal d'inclinaison du capteur d'image 14. Selon ce mode de réalisation, lorsque la ligne mobile 25 est confondue avec la ligne horizontale fixe 22, l'image de prise de vue est bien alignée par rapport à l'horizon.

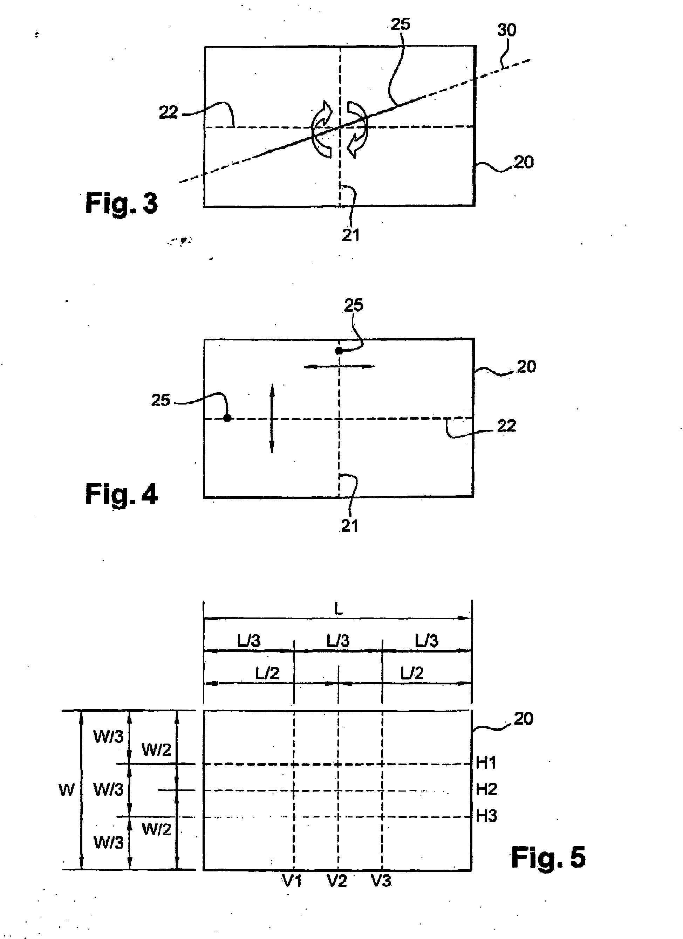

Les figures 3 à 5 illustrent plusieurs modes de réalisation des moyens d'indication de l'inclinaison de l'appareil de prise de vue.

En tout état de cause, le dispositif numérique de prise de vue comporte un écran de visualisation 20 de la prise de vue sur lequel est affichée au moins une ligne d'inclinaison de référence 21, 22 et un capteur d'inclinaison 17 adapté à afficher sur l'écran 20 au moins un curseur mobile 25 par rapport à ladite ligne d'inclinaison de référence 21, 22. Parla suite, les lignes d'inclinaison de référence seront illustrées verticale et/ou horizontale, mais il est entendu qu'elles peuvent être diagonales.

Selon un premier mode de réalisation, illustré sur la figure 3, une ligne verticale 21 et une ligne horizontale 22 sont affichées sur l'écran de visualisation 20. Le curseur mobile 25 est constitué par une ligne d'inclinaison mobile correspondant à la ligne d'horizon 30. Cette ligne mobile 25 est adaptée à se confondre avec la ligne horizontale 22. Il est entendu que le curseur mobile 25 peut également être une ligne d'inclinaison mobile adaptée à se confondre avec la ligne verticale 21. Il est également entendu que seule une ligne horizontale 22 peut être affichée sur l'écran 20 avec un curseur mobile 25 constitué par une ligne mobile adaptée à se confondre avec cette ligne horizontale 22 ; ou seule une ligne verticale 21 peut être affichée sur l'écran 20 avec un curseur mobile 25 constitué par une ligne mobile adaptée à se confondre avec cette ligne verticale 22.

Se lo n un deuxième mode de réalisation, illustré figure 4, une ligne verticale 21 et une ligne horizontale 22 sont également affichées sur l'écran de visualisation 20. Le curseur mobile 25 est constitué par deux points mobiles adaptés à se placer respectivement surla ligne horizontale 22 et sur la ligne verticale 21. Il est entendu que le curseur mobile 25 peut être constitué par un seul point mobile adapté à se placer sur l'une ou l'autre des ligne s d'inclinaison fixe 21, 22.

Il est également entendu que le curseur mobile 25 peut comprendre au moins une ligne d'inclinaison mobile comme sur la figure 3 et au moins un point mobile comme surla figure 4, mais cela aurait tendance à beaucoup alourdir l'écran de visualisation 20 au détriment de l'image de prise de vue à visualiser.

Selon les modes de réalisation, les lignes d'inclinaison de référence 21, 22 peuvent être fixes dans l'écran, par exemple être respectivement disposées au centre de la largeur et de la hauteur de l'écran 20; ou être mobiles dans l'écran, par exemple être déplaçables parallèlement aux bords de l'écran 20. A cet effet, une interface homme-machine peut inclure des commandes pour déplacer une ligne d'inclinaison fixe 21, 22 afin de la placer sur un repère de l'image à saisir en prise de vue. Par exemple, un bord de falaise peut être alignée avec une ligne verticale mobile placée dans une portion latérale de l'écran. Ainsi, les lignes d'inclinaison fixe 21, 22 peuvent non seulement être utilisées pour contrôler l'inclinaison de l'image par rapport à l'horizontal, mais également pour centrer l'image par rapport à certains objets à saisir en p rise de vue.

Selon un mode de réalisation possible, les lignes d'inclinaison de référence peuvent être mobiles en inclinaison. A cet effet, une interface homme-machine peut inclure des commandes pour appliquer une rotation à une ligne d'inclinaison de référence 21, 22 afin de la placer sur un repère de l'image à saisir en prise de vue ; par exemple pour des prises de vues aériennes ou tout autre besoin du photographe. Une telle commande de rotation de la ligne d'inclinaison de référence peut également être utilisée pour passer d'un mode d'affichage d'une ligne de référence horizontale à unmode d'affichage d'une ligne de référence verticale.

Selon le mode de réalisation illustré sur la figure 5, une pluralité de lignes horizontales fixes et une pluralité de lignes verticales fixes sont affichées sur l'écran de prise de vue pour former un quadrillage. De préférence, au moins une de ces lignes constitue la ligne d'inclinaison fixe 21, 22 par rapport à laquelle se positionne le curseur mobile 25.

Le quadrillage constitué par cette pluralité de lignes verticales v₁, v₂, v₃ et horizontales h₁, h₂, h₃ fixes permet de centrer l'image par rapport à certains objets à saisir en prise de vue, et peut ainsi remplacer les lignes d'inclinaison fixe mobiles par rapport aux bords de l'écran décrites précédemment.

Selon le mo de de réalisation illustré sur la figure 5, a u moins une ligne horizontale fixe h₂ et au moins une ligne verticale fixe v₂ sont respectivement placées au centre W/2 de la hauteur W et au centre L/2 de la largeur L de l'écran 20. Par ailleurs, au moins une ligne horizontale fixe h₁, h₃ et au moins une ligne verticale fixe v₁, v₃ sont respectivement placées sur la délimitation du tiers W/3 de la hauteur W et du tiers L/3 de la largeur L de l'écran 20. Cette disposition des lignes verticales et horizontales fixes permet de répondre à la plupart des besoins de cadrage rencontrés par les professionnels de la photo.

L'invention permet ainsi de proposer un dispositif de prise de vue qui permet un contrôle optimal de l'inclinaison et du cadrage de la prise de vue par un utilisateur.

## Revendications

1. Un dispositif numérique de prise de vue (10) **caractérisé en ce qu**'il comprend :
- un écran de visualisation (20) de la prise de vue, sur lequel est affichée au moins une ligne d'inclinaison de référence (21, 22);
- un capteur d' inclinaison (17) adapté à afficher sur l'écran (20) au moins un curseur mobile (25) par rapport à ladite ligne d'inclinaison de référence (21, 22),
- une interface homme-machine adaptée à commander le déplacement de la ligne d'inclinaison de référence.

2. Le dispositif selon la revendication 1, **caractérisé en ce qu**'au moins une ligne verticale mobile (21) et/ou au moins une ligne horizontale mobile (22) sont affichées sur l'écran de visualisation (20).

3. Le dispositif selon la revendication 2, **caractérisé en ce que** ladite interface homme-machine est adaptée à commander le déplacement de ladite au moins une ligne verticale (21) et/ou horizontale (22) parallèlement aux bords de l'écran(20).

4. Le dispositif selon la revendication 1, **caractérisé en ce que** ladite interface homme-machine est adaptée à commander la rotation de la ligne d'inclinaison de référence (21, 22).

5. Le dispositif selon l'une des revendications 1 à 4, **caractérisé en ce que** le curseur mobile (25) comprend au moins une ligne d'inclinaison mobile adaptée à se confondre avec au moins une ligne d'inclinaison de référence (21, 22).

6. Le dispositif selon l'une des revendications 1 à 5, **caractérisé en ce que** le curseur mobile (25) comprend au moins un point mobile adapté à se placer sur au moins une ligne d'inclinaison de référence (21, 22).

7. Le dispositif selon l'une des revendications 1 à 6, **caractérisé en ce qu**'une pluralité de lignes horizontales fixes (h₁, h₂, h₃) et une pluralité de lignes verticales fixes (v₁, v₂, v₃) sont affichées sur l'écran (20) de prise de vue pour former un quadrillage.

8. Le dispositif selon la revendication 7, **caractérisé en ce que** au moins une ligne horizontale fixe (h₂) et au moins une ligne verticale fixe (v₂) sont respectivement placées au centre de la hauteur (W/2) et au centre de la largeur(L/2) de l'écran.

9. Le dispositif selon la revendication 7 ou 8, **caractérisé en ce que** au moins une ligne horizontale fixe (h₁, h₃) et au moins une ligne verticale fixe (v₁,v₃) sont respectivement placées sur la délimitation du tiers de la hauteur (W/3) et du tiers de la largeur (L/3) de l'écran.

## Claims

1. Digital image-taking device (10) **characterized in that** it comprises:
- an image display screen (20), on which at least one tilt reference line (21,22) is displayed;
- a tilt angle sensor (17) adapted to display on the screen (20) at least one cursor (25) mobile with respect to said tilt reference line (21,22),
- a man-machine interface adapted to control the displacement of the tilt reference line.

2. The device in claim 1, **characterized in that** at least one mobile vertical line (21) and/or at least one mobile horizontal line (22) are displayed on the viewing screen (20).

3. The device in claim 2, **characterized in that** said man-machine interface is adapted to control the displacement of said at least one vertical line (21) and/or horizontal line (22) parallel to the edges of the screen (20).

4. The device in claim 1, **characterized in that** said man-machine interface is adapted to control the rotation of the tilt reference line (21,22).

5. The device in any of claims 1 to 4, **characterized in that** the mobile cursor (25) comprises at least one mobile tilt line adapted to merge with at least one tilt reference line (21,22).

6. The device in any of claims 1 to 5, **characterized in that** the mobile cursor (25) comprises at least one mobile dot adapted to move along at least one tilt reference line (21,22).

7. The device in any of claims 1 to 6, **characterized in that** a plurality of fixed horizontal lines (h₁,h₂,h₃) and a plurality of fixed vertical lines (v₁,v₂,v₃) are displayed on the image viewing screen (20) to form a grid.

8. The device in claim 7, **characterized in that** at least one fixed horizontal line (h₂) and at least one fixed vertical line (v₂) are respectively positioned in the centre of the height (W/2) and in the centre of the width (L/2) of the screen.

9. The device as in claim 7 or 8, **characterized in that** at least one fixed horizontal line (h₁,h₃) and at least one fixed vertical line (v₁,v₃) are respectively positioned on the delimitation of one third of the height (W/3) and one third of the width (L/3) of the screen.

## Patentansprüche

1. Digitale Bildaufnahmevorrichtung (10), **dadurch gekennzeichnet, dass** sie umfasst:
- einen Anzeigeschirm (20) für die Bildaufnahme, auf dem wenigstens eine Bezugsneigungslinie (21, 22) angezeigt wird;
- einen Neigungssensor (17), der so beschaffen ist, dass er auf dem Schirm (20) wenigstens einen in Bezug auf die Bezugsneigungslinie (21, 22) beweglichen Cursor anzeigt,
- eine Mensch/Maschine-Schnittstelle, die so beschaffen ist, dass sie die Verschiebung der Bezugsneigungslinie steuert.

2. Vorrichtung nach Anspruch 1, **dadurch gekennzeichnet, dass** wenigstens eine bewegliche vertikale Linie (21) und wenigstens eine bewegliche horizontale Linie (22) auf dem Anzeigeschirm (20) angezeigt werden.

3. Vorrichtung nach Anspruch 2, **dadurch gekennzeichnet, dass** die Mensch/Maschine-Schnittstelle so beschaffen ist, dass sie die Verlagerung der wenigstens einen vertikalen Linie (21) und/oder der wenigstens einen horizontalen Linie (22) parallel zu den Rändern des Schirms steuert.

4. Vorrichtung nach Anspruch 1, **dadurch gekennzeichnet, dass** die Mensch/Maschine-Schnittstelle so beschaffen ist, dass sie die Drehung der Bezugsneigungslinie (21, 22) steuert.

5. Vorrichtung nach einem der Ansprüche 1 bis 4, **dadurch gekennzeichnet, dass** der bewegliche Cursor (25) wenigstens eine bewegliche Neigungslinie umfasst, die so beschaffen ist, dass sie mit wenigstens einer Bezugsneigungslinie (21, 22) zur Deckung kommt.

6. Vorrichtung nach einem der Ansprüche 1 bis 5, **dadurch gekennzeichnet, dass** der bewegliche Cursor (25) wenigstens einen beweglichen Punkt umfasst, der so beschaffen ist, dass er auf wenigstens einer Bezugsneigungslinie (21, 22) zu liegen kommt.

7. Vorrichtung nach einem der Ansprüche 1 bis 6, **dadurch gekennzeichnet, dass** auf dem Aufnahmeschirm (20) mehrere feste horizontale Linien (h₁, h₂, h₃) und mehrere feste vertikale Linien (v₁, v₂, v₃) angezeigt werden, um ein Raster zu bilden.

8. Vorrichtung nach Anspruch 7, **dadurch gekennzeichnet, dass** wenigstens eine feste horizontale Linie (h₂) und wenigstens eine feste vertikale Linie (v₂) in Höhenmitte (W/2) und in Breitenmitte (L/2) des Schirms angeordnet sind.

9. Vorrichtung nach Anspruch 7 oder 8, **dadurch gekennzeichnet, dass** wenigstens eine feste horizontale Linie (h₁, h₃) und wenigstens eine feste vertikale Linie (v₁, v₃) auf der Begrenzung des Höhendrittels (W/3) bzw. des Breitendrittels (L/3) des Schirms angeordnet sind.
